# EUROPEAN PATENT APPLICATION

(11) **EP 0 718 388 A2**
(43) Date of publication of application: **26.06.1996**
(21) Application number: 95119308.5
(22) Date of filing: 07.12.1995
(51) Int. Cl.: C09K 21/02, C09K 21/04, C09D 5/18, H01B 7/34, D06M 15/43, D21H 21/34, D06M 15/11

(54) **Fire-protective substance and method for producing and depositing of a fire-protective substance**

(30) Priority: 17.02.1995 DE 19505464; 12.12.1994 DE 4444160
(71) Applicant: Balle, Erika, F-57220 Eblange (FR); Otto, Eugen, D-66763 Dillingen/Saar (DE); Otto, Uta, Dr., D-66763 Dillingen/Saar (DE)
(72) Inventor: Balle, Erika, F-57220 Eblange (FR); Otto, Uta, Dr., D-66763 Dillingen/Saar (DE)
(74) Representative: Volpert, Marcus, Dr.

(57) **Abstract**

The invention relates to a fire-protective substance particularly for the treatment of objects made of steel, for plastic materials, wood, regenerating raw materials, for the coating of cables, for wettable and/or absorptive materials, and further relates to a method for producing of a fire-protective substance particularly for the last-mentioned materials and to a method for depositing of a fire-protective substance particularly on an object made of steel.

The fire-protective substance according to the present invention comprises particularly for objects made of steel at least one priming component, further an intermediate component as well as a swelling component, particularly for plastic materials the dehydrating agent ammonium polyphosphate, particularly for the treatment of wood an insulating layer forming agent, particularly for the coating of cables clay in addition to the insulating layer forming agent and particularly for the wettable and/or absorptive materials as dehydrating agent which is solved in water, urea phosphate, monoammonium phosphate and diammonium phosphate. According to the method of the present invention for producing of a fire-protective substance, a binding agent is, first of all, solved in water; this admixture is diluted by water; urea phosphate, monoammonium phosphate are solved therein and, after a further addition of water, diammonium phosphate is added with such a portion that the resulting solution is neutralized. According to the method of the present invention, the first priming component is deposited on the surface of the object made of steel which is to be protected, then the intermediate component and the swelling component are deposited, and finally the second priming component is deposited on the swelling component.

The fire-protective substance is particularly suitable for objects made of steel and for regenerating raw materials, for example deciduous trees or conifers in order to avoid the danger of a forest fire or a fire of christmas trees.

## Description

### BACKGROUND OF THE INVENTION

The invention relates to a fire-protective substance according to the preamble of claim 1, to a method for depositing of a fire-protective substance according to the preamble of claim 5, to a fire-protective substance according to the preamble of claims 7, 11, 13 and 15, to a method for producing of a fire-protective substance according to the preamble of claim 18 and to a method for treating materials or substances with a fire-protective substance according to the preamble of claim 20.

The term "fire-protective substance" is used herein as a designation for all means which are related to the burning-down, glowing, smouldering, to the flammability or to other characteristics which are related thereto. Therefore, especially fire-proofing substances, flame-protective substances, means for increasing the fire resistance, extinguishing substances or additives for extinguishing substances are understood as "fire-protective substances".

### DESCRIPTION OF THE PRIOR ART

A fire-protective substance of the above mentioned type is for example known from WO 91/16403. This document mainly relates on the treatment of plastic materials, for example of polyurethanes. Indications for the composition for example of a standard flexible foam are stated in this document. The composition of the fire-protective substance being included in such a standard flexible foam is not explained in detail; it is only stated that the fire-protective substance comprises aluminum oxide among other substances, which oxide is solubilized with hydrated soda from the raw material bauxite and which shall exhibit the fire-protective effect when mixed with carbohydrates and starches. Regarding the treatment of wood, textiles, paper and paperboard as well as carpets, foils, woodpulp, cellulose and similar products, a further fire-protective substance according to the above-mentioned document consists of 20 parts by weight of diammonium hydrogen phosphate, 20 parts by weight of urea phosphate, 10 parts by weight of borax, 12 parts by weight of starch and remaining parts of water.

### SUMMARY OF THE INVENTION

It is an object of the present invention to provide a further effective fire-protective substance which has as low toxic properties as possible, a method for depositing of a fire-protective substance, a method for producing of a fire-protective substance and a method for treating of materials or substances with a fire-protective substance.

The fire-protective substance according to the present invention is particularly suitable for treating of objects made of steel, for plastic materials, for treating of wood or substances comprising wood and/or regenerating raw materials, for coating of cables as well as for all wettable and/or absorptive materials or substances; the method according to the present invention for depositing of a fire-protective substance is particularly suitable for an object made of steel; the method according to the present invention for producing of a fire-protective substance is particularly suitable for the above-mentioned materials or substances; and the method according to the present invention for treating of materials or substances with a fire-protective substance is particularly suitable for each of the above-mentioned fire-protective substances.

The above-mentioned object of the present invention is solved by a fire-protective substance comprising the features of claim 1, 7, 11, 13 and 15 and by a method comprising the features of claim 5, 18 and 20.

Each of the fire-protective substances according to the present invention is highly effective.

The fire-protective substance according to the present invention for treating of objects made of steel complies with the requirements of the class of fire resistance F 120, in which it is stated that, if the front face of an object which is provided with the fire-protective substance, is subjected to flames, the backside of the respective object shall have a temperature less than 500 °C during a duration of 120 minutes. It is advantageous that the at least one priming component as well as the intermediate component and the swelling component are based on organic compounds without any components which may form halogenes. Thus, no dangerous final products, especially no halogen compounds, are formed under the influence of heat so that this fire-protective substance is neither toxic nor corrosive.

The fire-protective substance which is particularly suitable for treating of objects made of steel and the fire-protective substance which is related to wood, materials comprising wood or materials comprising regenerating raw materials or the fire-protective substance which is suitable for the coating of cables act as follows:

The fire-protective substance according to the present invention decomposes at higher temperatures and absorbs thereby a considerable amount of heat which is taken away from the protected object. Therefore, the respective objects are protected against a quick thermical decomposition. It is less probable that burnable decomposition products are formed.

During the decomposition of the fire-protective substance, a foaming of the fire-protective substance and the forming of a protective layer occurs due to the swelling effect. Thus, oxygen which is necessary for the burning, cannot reach the flames any longer such that the feeding of oxygen is interrupted. The predescribed protective layer has a good thermal insulating effect such that the object or the respective material or the object comprising the material are also protected against the influence of extreme heat. Thus, it is less probable that the material of which the object is formed, reaches its critical limit of strength. The construction or the respective object remains rigid and may transmit forces over a longer period of time. Thus, it is less probable that any crashing down, caving-in or any buckling of a respective object may occur.

Furthermore, inert gases are normally formed during the decomposition of the fire-protective substance, said gases extensively stopping the feeding of oxygen to the flames.

During the decomposition of the fire-protective substance according to the present invention, steam is finally formed which also forms a protective gas around the material or the substance of the object to be protected, said protective gas displacing oxygen.

A layer is normally formed by the carbonization product at the surface of the material or the respective object being treated with the fire-protective substance according to the invention. This layer stops a further proceeding of the burning and reduces the density of the smoke gases. The materials being provided or treated with the fire-protective substance according to the invention are difficult to inflame; they do not burn or are automatically extinguished at once or after a short period of time as soon as the ignition flame has been removed or the influence of flames has been stopped. Thus, extremely low values are reached for the so-called subsequent burning time. Any afterglowing of the material or of the object comprising the fire-protective substance is not possible since no oxygen may further reach the respective material or the object.

It is an advantage of the present invention that the dehydrating agent is the liquid product melflam 136 and ammonium polyphosphate, preferably exolith 462, that the binding agent is the product lafarge, in connection with the swelling component together with a saccharide, preferably maltodextrine 19, and that the blowing agent is the product melamine. According to a preferred embodiment of the invention, the ceramic wool consists of crushed ceramic fibers, the fire-proof clay consists of ground chamotte, the glaze consists of the product engobe, the insulating material consists of the powdery product vermiculit fine, the additional clay consists of kaolin, preferably of the product molochite, and the insulating layer forming agent consists of the product dyhard 100 S as an additional blowing agent. The above-mentioned, nearly natural-like materials do not form dangerous final products, particularly no halogen compounds, under the influence of heat. Furthermore, no radical chains are formed in the gas phase such that also the forming of smoke being increased thereby, is avoided.

According to a preferred embodiment of the invention, the priming component is a mixture having the composition
- 240 ml: melflam 136
- 515 g: lafarge
- 20 g: ceramic wool
- 300 g: chamotte
- 400 g: engobe
- 300 g: exolith 462,
the intermediate component is a mixture having the composition
- 1790 ml: melflam 136
- 988 g: lafarge
- 122 g: ceramic wool
- 300 g: chamotte
- 400 g: engobe
- 300 g: exolith 462
- 693 g: vermiculit
- 300 g: molochite,
and the swelling component is a mixture having the composition
- 370 ml: melflam 136
- 300 g: lafarge
- 60 g: ceramic wool
- 300 g: of a mixture consisting of
300 g blowing graphite
500 g chamotte
- 530 g: exolith 462
- 400 g: of a mixture consisting of
441 ml melflam 136
358 g maltodextrine 19
16 g melamine
62 g exolith 462
21 g dyhard 100 S.

It is apparent that fractions as well as multiple values of the above-mentioned volume data or weight data may also be used for producing of the fire-protective substance according to the present invention. It is particularly possible to convert the above-mentioned compositions in parts by weight. The density of the liquid product melflam which density is needed for this conversion, is 1250 kg/m³. The products maltodextrine 19, melamine, exolith 462, dyhard 100 S are in a powdery condition.

According to a preferred embodiment of the invention, the viscosity of the respective component may be adjusted with further blowing agent, preferably melamine. Thus, it is easy possible to adapt the viscosity of the substance according to the invention to the manner in which the substance is deposited onto the object to be protected and to adapt the viscosity to the structure of the object.

It is advantageous that the thickness of deposition on the object to be protected is about 0.8 mm for the first priming component, about 1 mm for the intermediate component, about 2.7 mm for the swelling component and about 0.4 mm for the second priming component. The complete thickness of deposition of the first and second priming component, the intermediate component and the swelling component is preferably at least 4.9 mm. Thus, an especially effective protective layer is ensured together with a high, subsequent inhibition of a further feeding of oxygen in case of a thermal decomposition of the substance. Moreover, a good thermal insulation of the object provided with the substance is achieved. Any buckling, especially of constructions made of steel, together with the subsequent detrimental results for persons which may stay therein are delayed to a great extent or completely avoided.

After cleaning, particularly sandblasting, of the object to be provided with the fire-protective substance, the method according to the invention for depositing of said substance is based on the following steps:
(a) depositing of the first priming component onto the surface of the clean, fat free object;
(b) depositing of the intermediate component or of the swelling component onto the component according to (a);
(c) depositing of the swelling component (unless already deposited under (b)) or of the intermediate component (unless already deposited under (b)) onto the component according to (b);
(d) depositing of the second priming component onto the component according to (c).

Thus, the object to be protected is finally provided with a highly effective fire-protective substance consisting of four components.

The subsequent component is preferably deposited onto the dry, preceding component. The drying time at ambient conditions is about 10 to 48 hours.

Since the fire-protecting substance according to the present invention is soluble in water, a final covering component not being soluble in water, for example a lacquer containing solvents, may be deposited onto the second priming component with objects which are subjected to environmental influences, such as rain or humidity. It is apparent that the depositing of the above-mentioned final covering component may be omitted if the subject provided with the fire-protective substance according to the invention is still to be covered and thus be protected against water or humidity.

According to a preferred embodiment of the method according to the invention, the respective components are deposited in the form of a cover or a coating onto the object by means of one or more coats of paint, by one single spraying or by multiple spraying, by sprinkling or by submerging the object into the respective component. It is advantageous that the respective components described above may also be designed by colour such that the respective object may be formed in an aesthetical manner. Furthermore, it is possible that objects which are still in use, may be provided with the fire-protective substance according to the present invention, and that objects which are still to be mounted, are assembled by means of components or parts which are already provided with the fire-protective substance. Thus, it is possible to achieve an extensive pretreatment of the single parts of the object and a shorter assembling time.

According to the present invention, the fire-protective substance, particularly for plastic materials, for example thermoplastic, duroplastic, elastomeric materials, polyurethanes or the like, comprises at least one dehydrating agent and/or a blowing agent, wherein the dehydrating agent is ammonium phosphate and the blowing agent is melamine or melamine phosphate or melamine cyanurate. According to another embodiment of the present invention, the fire-protective substance additionally includes a binding agent, namely at least one saccharide, preferably maltodextrine and/or starch, or one saccharide, preferably maltodextrine, and gelatine. The above-mentioned, extensively natural-like materials do not form dangerous final products, particularly no halogen compounds, under the influence of heat. No radical chains are formed in the gas phase such that also the forming of smoke being increased by said radical chains, is avoided.

According to a preferred embodiment of the invention, 3 - 30 parts by weight of the dehydrating agent and/or the blowing agent related to the weight of the original mass of product to be treated, thus particularly related to the mass of the plastic material, are admixed thereto as an additive or filler. According to a further embodiment of the invention, 6 - 60 parts by weight of the binding agent related to the original mass of product or mass of plastic material are admixed thereto as an additive or filler, wherein 3 - 30 parts by weight of each saccharide or of the saccharide as well as the gelatine related to the weight of the original mass of product or the mass of plastic material are preferably present, respectively. Thus, the fire-protective substance according to the present invention may directly be added to the respective material, especially to the plastic material, during the preparation of the respective material. It is advantageous that a special treatment/aftertreatment of the material or of the object comprising the material is not necessary since the material itself shows the desired fire-retarding characteristics.

According to the present invention, the fire-protective substance which is suitable particularly for the treatment of wood or materials comprising wood or regenerating raw materials comprises an insulating layer forming agent by which especially the swelling effect mentioned above is favoured. Thus, the materials provided with such a fire-protective substance are protected with respect to the direct influence of the fire by a heat insulating layer of foam such that these materials are difficult to inflame.

According to a preferred embodiment of the invention, the dehydrating agent of the last-mentioned fire-protective substance is the liquid product melflam and ammonium polyphosphate, preferably the product exolith 462, the binding agent is a saccharide, preferably maltodextrine, and the blowing agent is melamine or melamine phosphate or melamine cyanurate. The insulating layer forming agent preferably is the product dyhard 100 S as an additional blowing agent. Thus, the dehydrating agent regarding this fire-protective substance finally comprises two components, namely the liquid product melflam and powdery ammonium polyphosphate. It is advantageous that the viscosity of the fire-protective substance is adjustable by means of the product melflam such that it is possible without problem to adapt the viscosity of a substance according to the invention to the kind of depositing of the substance onto the object to be protected and to the structure and the properties of the surface of the object. Thus, a brushable, aqueous emulsion can easily be obtained as a fire-protective substance forming a layer of foam.

According to another embodiment of the invention, the last-mentioned fire-protective substance according to the invention comprises an admixture having the following composition:
- 441 ml: melflam
- 358 g: maltodextrine
- 16 g: melamine
- 21 g: dyhard 100 S
- 62 g: exolith 462.

It is apparent that fractions as well as multiple values of the predescribed volume or weight data may be used for producing of the fire-protective substance according to the invention. This is also true with respect to the following statements. These compositions may particularly be converted into parts by weight. The density of the liquid product melflam which is needed for said conversion, is again 1250 kg/m³. The products maltodextrine, melamine including the above-mentioned melamine compounds, dyhard 100 S, exolith 462 are again powdery products.

According to the present invention, the fire-protective substance which is particularly suitable for the coating of cables, comprises in addition to a dehydrating agent, a binding agent and a blowing agent further clay (or, if desired, different types of clay) and an insulating layer forming agent. The clay preferably is a fire-proof clay in form of ground chamotte and additional clay in form of kaolin, preferably the product molochite, and the insulating layer forming agent, as mentioned above, is the product dyhard 100 S as a further blowing agent. The last-mentioned materials, at least with respect to the clay, also are extensively natural-like materials; under an increased influence of temperature, they do not decompose into final products which form an environmental problem or which are even toxic.

According to a preferred embodiment, the fire-protective substance which is particularly suitable for the coating of cables, consists of an admixture having the following composition:
- 29.1 l: melflam
- 6.9 kg: maltodextrine
- 2.6 kg: starch
- 0.603 kg: melamine
- 8.9 kg: chamotte
- 6.9 kg: molochite
- 0.4 kg: dyhard 100 S
- 4.9 kg: exolith 462.

It is again repeated that for producing of the fire-protective substance according to the present invention fractions as well as multiple values of the predescribed volume and weight data may be used in the last-mentioned case as well as in the following cases. Also in the last-mentioned case, the viscosity of the fire-protective substance is adjustable by means of the liquid product melflam. A pasty and/or brushable mass is advantageous which may be deposited onto the cable, particularly but not exclusively on electrical cables or on tubes to be protected.

According to the present invention, the fire-protective substance which is suitable particularly for wettable and/or absorptive materials or substances, for example textiles, paper, paperboard, regenerating raw materials and the like, comprises a dehydrating agent which is dissolved in water, namely urea phosphate, monoammonium phosphate and diammonium phosphate or instead of the last-mentioned material ammonium hydrogen phosphate or ammonium phosphate or ammonium sulphate, and further comprises a binding agent, preferably starch, especially maize starch or carbonized starch. Thus, the dehydrating agent of this embodiment includes at least three components of which urea phosphate and monoammonium phosphate have acid properties and of which diammonium phosphate, ammonium hydrogen phosphate, ammonium phosphate as well as ammonium sulphate have alkaline or basic properties.

According to an advantageous embodiment, the fire-protective substance according to the present invention is a concentrated, acid parent solution having the following composition:
- 20 l: water
- 19 g: maize starch
- 8.2 kg: urea phosphate
- 4.2 kg: monoammonium phosphate,
which may be neutralized by the addition of 50 parts by weight of water with respect to the weight of the parent solution and 1 to 4.2 kg diammonium phosphate or ammonium hydrogen phosphate or ammonium phosphate or ammonium sulphate such that the resulting solution has a pH-value between 6.5 and 7.2. Thus, a neutralization of the parent solution may easily be performed.

It is further advantageous that the admixture may further include the predescribed fire-protective substance for the treatment of wood or materials which comprises wood or regenerating raw materials. The portion of the last-mentioned fire-protective substance in the solution may be 5 to 30 % by weight. The last-mentioned fire-protective substance mainly acts as a blowing agent in this case and supports the swelling effect mentioned above and, thus, the formation of a protective layer on the respective materials.

According to the present invention, the admixture further includes emulsifying agents and/or cross-linking agents, preferably the product dipolit 454. It is possible by means of the last-mentioned materials that a precipitation or a crystallization of predetermined components, for example diammonium phosphate, ammonium hydrogen phosphate, ammonium phosphate or ammonium sulphate, may be reduced or avoided and that it is delayed that the deposited fire-protective substance may be washed out particularly during a chemical cleaning of the respective materials or substances.

Regarding the method, the invention also relates to the production of a fire-protective substance which is particularly suitable for wettable and/or absorptive materials. The most important steps of this method are stated in claim 18. Thus, a considerable dilution of the solution is possible without affecting in most cases the efficiency of the fire-protective substance. At least the diluted solution may be produced in a very effective manner and at low costs.

Emulsifying agents and/or cross-linking agents may advantageously be added to the solution in order to delay the starting of a crystallization process or the washing of the fire-protective substance out of the respective material during a chemical cleaning, as mentioned above.

According to another embodiment of the method of the present invention, the fire-protective substance may be deposited on the material to be protected or the substance to be protected or the object comprising the material or substance as an impregnating or coating substance or may directly be incorporated into the material as an additive or a filler. The depositing of the fire-protective substance in the form of an impregnating or coating substance may preferably be performed by brushing or spraying the fire-protective substance onto the material, or onto the object; it is further possible to submerge the material, the substance or the object into the fire-protective substance.

According to the present invention, the fire-protective substance which is suitable particularly for plastic materials, is mainly used as an additive or a filler; the fire-protective substance which is suitable particularly for the treatment of wood or materials comprising wood or regenerating raw materials, and the fire-protective substance which is suitable for the coating of electrical cables, are mainly used as coating substance; and the fire-protective substance which is suitable particularly for wettable and/or absorptive materials or substances, may be used as an impregnating substance as well as an additive or a filler. In the last-mentioned case, the fire-protective substance may preferably be incorporated into the glue or into the binding agent, for example for producing of chip boards, paper, fibers and fabrics for clothing or carpets or the like. It is further possible that the fire-protective substance is directly added to the material or substance to be protected such that the material or the substance itself comprises the desired fire-retarding properties.

### DESCRIPTION OF THE DRAWINGS

A better understanding of the invention will be reached by reference to the following detailed description which may partly be read in conjunction with the accompanying drawings in which:
- Figure 1: is a schematic, perspective partial view of an object made of steel being provided with a fire-protective substance; and
- Figure 2: is a cross-section along the lines II-II of Figure 1 in an enlarged, schematic view.

### DETAILED DESCRIPTION OF PREFERRED EMBODIMENTS OF THE INVENTION

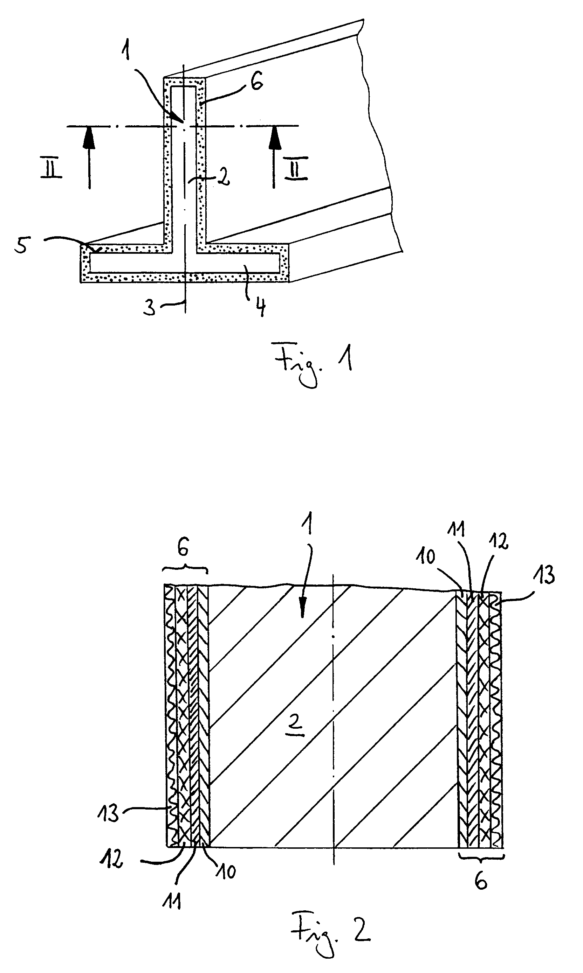

Figure 1 shows a schematic, perspective view, partly in cross-section, of an object 1 having the form of a T-shaped profile made of steel. The one leg 2 extends in direction of the vertical axis 3 of the T-shaped profile and is integrally connected at its other, in Figure 1 lower end with a transversal other leg 4.

According to Figure 1, the complete surface 5 of the object is coated with the fire-protective substance 6 according to the present invention, which is only schematically shown in Figure 1 in dotted form. In respect of a better surview, the fire-protective substance is omitted in Figures 1, 2 on the front face of the T-shaped profile. Normally, the front face is also coated with the fire-protective substance.

A cross-section along the line II-II of Figure 1 is schematically shown in Figure 2 in an enlarged view. It is obvious from Figure 2 that the fire-protective substance 6 at least comprises four components, namely a first priming component 10, an intermediate component 11, a swelling component 12 and a second priming component 13.

The first priming component consists of at least one dehydrating agent, a binding agent, ceramic wool, a fire-proof clay and a glaze. This first priming component preferably has the following composition:
- 240 ml: melflam 136
- 515 g: lafarge
- 20 g: ceramic wool
- 300 g: chamotte
- 400 g: engobe
- 300 g: exolith 462,
wherein the products melflam 136 and exolith 462 are used as a dehydrating agent, the product lafarge is used as a binding agent, ground chamotte is used as a fire-proof clay, and the product engobe is used as a glaze. The liquid product melflam is a mixture, namely an aqueous condensate, of phosphate and nitrogen, said mixture having a pH-value of 1 to 2. The product lafarge is an agent for quickly binding the cement. The chamotte is particularly a ceramic chamotte KS 18 from the Company H.J. Schmidt Industrie-Minerale GmbH, Neuwied, Germany. The glaze engobe comprises kaolin (for example kaolin AL from the Company SOCIETE KAOLINIERE ARMORICAINE, Saint Brieuc, France), quartz powder, water and glue (known under the term "flamose"). The product exolith 462 comprises as a main component ammonium polyphosphate. The above-mentioned details also apply to the corresponding substances of the following components.
The intermediate component 11 comprises in addition to the respective constituents of the first priming component 10 an insulating material and additional clay, said intermediate component having the following composition:
- 1790 ml: melflam 136
- 988 g: lafarge
- 122 g: ceramic wool
- 300 g: chamotte
- 400 g: engobe
- 300 g: exolith 462
- 693 g: vermiculit
- 300 g: molochite,
wherein the products melflam, exolith 462 are used as a dehydrating agent, the product lagarge is used as a binding agent, ground chamotte is used as a fire-proof clay, the product engobe is used as a glaze, the powdery product vermiculit is used as an insulating material and kaolin, preferably in the form of the product molochite, is used as additional clay. The product molochite substantially consists of kaolin which may consist of 36.5 % Al₂O₃, 47.6 % SiO₂, 0.98 % Fe₂O₃, 1.6 % K₂O, 0.4 % TiO₂, 12.0 % loss due to burning, the remainder consisting of Na₂O, fluorine, carbon. The product vermiculit is a Mg-Al-silicate having the approximate composition of Mg₃(Al, Si)₄O₁₀(OH)₂·(H₂O)₄ with changing amounts of Fe^{III}. A typical vermiculit has for instance the following composition: 39 % SiO₂, 11 % Fe₂O₃, 14 % Al₂O₃, 22 % MgO, 5 % Na₂O + K₂O, 1 % CaO, 1% TiO₂. The swelling component 12 comprises at least one dehydrating agent, a binding agent, a blowing agent, ceramic wool, a fire-proof clay, blowing graphite and an insulating layer forming agent. The swelling component 12 has the following composition:
- 370 ml: melflam 136
- 300 g: lafarge
- 60 g: ceramic wool
- 300 g: of a mixture consisting of
300 g blowing graphite
500 g chamotte
- 530 g: exolith 462
- 400 g: of a mixture consisting of
441 ml melflam 136
358 g maltodextrine 19
16 g melamine
62 g exolith 462
21 g dyhard 100 S,
wherein the products melflame 136, exolith 462 are used as a dehydrating agent, the product lafarge is used as a binding agent, the product melamine is used as a blowing agent, ground chamotte is used as fire-proof clay, the product maltodextrine is used as a saccharide in the form of an additional binding agent and the product dyhard 100 S is used as an insulating layer forming agent in the form of an additional blowing agent. The product maltodextrine 19 is a quickly resorbable carbohydrate admixture for the enrichment of energy. The product melamine is 2,4,6-triamino-1,3,5-triazine (C₃H₆N₆). The product dyhard 100 S in the form of a powder contains at least 98 % of dicyandiamide (synonym cyano guadine), a substance for achieving voluminous foams.

The second priming component 13 comprises the same constituance and compositions as the first priming component.

According to Figure 2, the intermediate component 11 is deposited onto the surface of the first priming component 10, and the swelling component 12 is deposited onto the surface of the intermediate component. It is also possible to change the succession of the intermediate component and the swelling component, i.e. to deposit the swelling component 12 onto the surface of the first priming component 10 and to deposit the intermediate component 11 onto the surface of the swelling component.

Figure 2 shows a schematic view of a part of an object 1 provided with the fire-protective substance 6 in an enlarged form. The dimensions are not of correct scale.

According to the present invention, the thickness of deposition of the first priming component 10 is about 0.8 mm, of the intermediate component 11 about 1 mm, of the swelling component 12 about 2.7 mm and of the second priming component about 0.4 mm such that the whole thickness of deposition of the fire-protective substance 6 is at least 4.9 mm. The viscosity of each component 10 to 13 is adjustable in dependence on the choosen method for depositing of the fire-protective substance 6 onto the object 1. Thus, the viscosity may be adjusted for example by means of the product melamine and is adaptable thereby for example to the structure of the surface of the respective object and to the absorbency thereof.

The method according to the invention for depositing of a fire-protective substance particularly on an object made of steel includes the following steps which are later described in detail:

The first priming component 10 is deposited onto the whole surface of the clean, fat free object 1. In some cases, the object is to be sandblasted before the first priming component is deposited. After the drying of the first priming component 10, the intermediate component 11 or the swelling component 12 is deposited onto the first priming component 10. After the drying of the intermediate component 11 or the swelling component 12, the swelling component 12 or in case that this component was already deposited in the predescribed step, the intermediate component 11 is deposited in the next step. The second priming component is finally deposited onto the dry last mentioned component.

As a protection against moisture or humidity, a final covering component (not shown) which is not soluble in water, may be deposited onto the second priming component 13. The depositing of the respective component is carried out by means of a single or several coats of paint, by a single or multiple spraying, sprinkling or by submerging the object 1 into the respective component such that the fire-protective substance 6 is finally provided on the whole surface 5 of the object 1 in the form of a cover or a coating. The fire-protective substance 6 adheres to the surface 5 of the object without requiring any special steps going beyond the above-mentioned composition of each component.

According to Figure 1, the object 1 to be protected with the fire-protective substance 6 is a T-shaped profile. It is obvious that the invention is described for instance by such an object and that the fire-protective substance according to the present invention may be deposited on all objects to be protected, especially on objects made of steel. This is particularly true for constructions made of steel and iron, for fire-proofing doors, fire-proofing flaps and fire-proofing bulkheads. The fire-proofing substance according to the present invention is particularly suitable for the treatment of objects made of steel. As mentioned above, the fire-proofing substance may also be deposited on objects made of other materials.

It is further obvious that a less effective fire-protective substance which do not comply with the class of fire-resistance F 120 may also comprise less than the above-mentioned three or four components, for example only the priming component, the intermediate component or the swelling component or a combination of two of the above-mentioned components.

A fire-protective substance which is particularly suitable for plastic materials, for example thermoplastic, duroplastic, elastomeric materials, polyurethanes or the like, comprises the dehydrating agent ammonium polyphosphate and/or the blowing agent melamine or melamine phosphate or melamine cyanurate. Thus, such a fire-protective substance may include
a) only ammonium polyphosphate
   or
b) only melamine or the above-mentioned melamine compounds
   or
c) ammonium polyphosphate and melamine or the above-mentioned melamine compounds.

The fire-protective substance comprising the constituent/constituents as mentioned above under a) to c) further includes according to a preferred embodiment micro-fine minerals, for example alumina and/or ash.

Moreover, another fire-protective substance which is also suitable particularly for the above-mentioned plastic materials, comprises in addition to the dehydrating agent ammonium polyphosphate and the blowing agent melamine including the above-mentioned melamine compounds, a binding agent which includes at least a saccharide, preferably maltodextrine and/or starch (above all wheat starch), or a saccharide, preferably maltodextrine, and gelatine. The starch is present in fine-ground form or in microencapsulated form.

In this description, under the item "saccharide" are understood monosaccharides and polysaccharides. The last-mentioned saccharides also include oligosaccharides (disaccharides). The polysaccharides include sugar-like and non sugar-like polysaccharides. Particularly the types of starch and the cellulose belong to the non sugar-like polysaccharides. The product maltodextrine belongs to the sugar-like saccharides.

As a result, different fire-protective substances are suitable for the treatment of plastic materials. The above-mentioned different fire-protective substances are added as an additive or filler to the product, especially to the mass of the plastic material, wherein the parts of ammonium polyphosphate, melamine or melamine compounds, of each saccharide or of the gelatine respectively are 3 to 30 parts by weight related to the weight of the original mass of product, particularly to the weight of the original mass of the plastic material. The binding agent includes in dependence of the material or the substance to be treated either at least one saccharide, preferably maltodextrine together with starch, preferably wheat starch, or, on the other hand, a saccharide, preferably maltodextrine, together with gelatine.

The fire-protective substance which has been described above particularly with respect to plastic materials, is present as a powder.

In the following, the fire-protective substance according to the present invention which is particularly suitable for the treatment of wood or materials containing wood or regenerating raw materials, is described.

Solid wood, laminated particle boards (laminated flat pressed boards) also comprising veneers, scale boards are especially understood as "wood or wood-containing materials". The material may further comprise cellulose. Materials which may be harvested, particularly straw, reed, flax, grass, hay, as well as materials including said substances also in combinations, for example special insulating materials or building materials, above all mats made of building material, (heat)insulating plates, are understood as "materials which may include regnerating raw materials".

This fire-protective substance comprises a dehydrating agent, a binding agent and a blowing agent and further an insulating layer forming agent. The dehydrating agent is the liquid product melflam and ammonium polyphosphate, preferably the product exolith 462, the binding agent is a saccharide, preferably maltodextrine, the blowing agent is melamine or melamine phosphate or melamine cyanurate, and the insulating layer forming agent is the product dyhard 100 S as additional blowing agent.

This fire-protective substance preferably has the following composition including fractions and multiple values of the following values, wherein the relations between the respective components are to be kept constant:
- 441 ml: melflam
- 358 g: maltodextrine
- 16 g: melamine
- 21 g: dyhard 100 S
- 62 g: exolith 462.

The fire-protective substance is to be deposited all over the parts or surfaces to be protected. These parts or surfaces should be clean and fat free. The fire-protective substance may be laid on or sprayed or sprinkled on the respective surfaces. It is further possible to submerge the respective material into the fire-protective substance. Colours may be incorporated into the fire-protective substance, if desired. The mass of deposition is about 420 g/m². Since the fire-protective substance is soluble in water, the materials, if necessary, are to be protected against rain or humidity by means of a covering coat of paint which is solvent-soluble and not water-soluble. This covering coat of paint may be designed by colour. It is further possible to deposit the last-mentioned fire-protective substance also on styropore or the like.

The viscosity of the fire-protective substance is adjustable by means of the liquid product melflam in dependence on the surface of the respective material.

In the following, the fire-protective substance according to the present invention which is particularly suitable for the coating of cables, is described in further detail.

This fire-protective substance comprises a dehydrating agent, a binding agent and a blowing agent as well as additional clay and an insulating layer forming agent. The dehydrating agent is the liquid product melflam and ammonium polyphosphate, preferably the product exolith 462, the binding agent is at least one saccharide, preferably maltodextrine and/or starch, the blowing agent is melamine or melamine phosphate or melamine cyanurate, the clay preferably is a fire-proof clay in the form of ground chamotte and additional clay in the form of kaolin, preferably the product molochite, and the insulating layer forming agent is the product dyhard 100 S as an additional blowing agent. The above-mentioned clay may also consist or may be composed of different kinds of clay.

According to the present invention, this fire-protective substance preferably has the following composition wherein also fractions or multiple values of the following numerical values may be used if the relations of the numerical values are kept constant:
- 29.1 l: melflam
- 6.9 kg: maltodextrine
- 2.6 kg: starch
- 0.603 kg: melamine
- 8.9 kg: chamotte
- 6.9 kg: molochite
- 0.4 kg: dyhard 100 S
- 4.9 kg: exolith 462.

The resulting fire-protective substance is pasty or brushable and is normally directly deposited onto the cable. It is also possible to submerge a paper or fabric which preferably is not burnable and comprises a high resistance to tearing, into the fire-protective substance, to wrap the cable therewith and to finally deposit the fire-protective substance again onto the paper or fabric surrounding the cable/cables. Any skipping of the burning of cables from one cable to another cable is effectively avoided insofar preferably both cables are coated with the fire-protective substance. Moreover, any skipping of the burning of one cable to an object surrounding the cable is excluded.

The last-mentioned fire-protective substance may be used for the treatment of any kind of cables, particularly electrical cables, and further for the treatment of any kind of tubes or conduits, particularly hydraulic tubes and hydraulic conduits.

The viscosity of the fire-protective substance is again adjustable with the liquid product melflam. It is apparent that the viscosity is reduced by the addition of further melflam; therefore, the fire-protective substance becomes more liquid. As a further result, the viscosity of the fire-protective substance is increased if the portion of the product melflam is reduced in the admixture having the above-mentioned composition.

In the following, the fire-protective substance according to the present invention which is particularly suitable for wettable and/or absorptive materials or materials like textiles, paper, paperboard, regenerating raw materials or the like, is described in more detail.

This fire-protective substance comprises a dehydrating agent which is solved in water, in the form of urea phosphate, monoammonium phosphate and diammonium phosphate as well as a binding agent in form of starch, preferably maize starch or carbonized starch. Instead of the above-mentioned component diammonium phosphate, ammonium hydrogen phosphate or ammonium phosphate or ammonium sulphate may be used.

According to the present invention, this fire-protective substance comprises a concentrated, acid parent solution (pH-value 1 to 2) having the following composition which may also include fractions or multiple values of the mentioned numerical values:
- 20 l: water
- 19 g: maize starch
- 8.2 kg: urea phosphate
- 4.2 kg: monoammonium phosphate,
which parent solution may be neutralized by the addition of 50 parts by weight of water with respect to the weight of the parent solution and by the addition of 1 - 4.2 kg diammonium phosphate or ammonium hydrogen phosphate or ammonium phosphate or ammonium sulphate such that the resulting solution has a pH-value between about 6.5 and 7.2.

In addition to the above-mentioned components water, dehydrating agent and binding agent, the fire-protective substance according to the present invention comprises a blowing agent according to a preferred embodiment. This blowing agent preferably comprises the above-mentioned fire-protective substance particularly for the treatment of wood etc. In the last-mentioned case, the above-mentioned solution includes 5 to 30 % by weight of the respective blowing agent.

According to another embodiment of the invention, the fire-protective substance may further include emulsifying agents and/or cross-linking agents, preferably the product dipolit 454. The product dipolit 454 is an emulsifying agent or a cross-linking agent, namely a salt-compatible synthetic resin dispersion (acrylate).

This fire-protective substance is produced preferably in a mixer by the following steps wherein also fractions or multiple values of the data may be applied in this case if the respective relations of the components to each other are kept constant:
(a) dissolving of 19 g of a binding agent in 1 litre of water having a temperature between 60 and 80 °C;
(b) adding of 19 litres of water having a temperature between 60 and 80 °C into the admixture according to (a);
(c) adding of 8.2 kg urea phosphate and 4.2 kg monoammonium phosphate to the admixture according (b);
(d) adding of 50 parts by weight of water to the admixture according to (c);
(e) adding of diammonium phosphate or ammonium hydrogen phosphate or ammonium phosphate or ammonium sulphate to the admixture according to (d), said ammonium component being present with such a portion that the pH-value of the resulting solution is between about 6.5 and 7.2;
(f) optionally diluting of the solution according to (e) with water such that the portion of the solution in the final solution is between 10 and 100 % by weight.

Emulsifying agents and/or cross-liking agents may optionally be added to the solution or to the final solution.

If the fire-protective substance further comprises a blowing agent, preferably the fire-protective substance particularly for the treatment of wood etc., in addition to the dehydrating agent and the binding agent, it is possible to increase the portion of the binding agent. With respect to the above-mentioned step (a), the portion of the binding agent may be increased by 5 to 30 % by weight related to one litre of water.

In the last-mentioned case, the binding agent preferably comprises
(a) starch or
(b) the fire-protective substance particularly for the treatment of wood etc. or
(c) at least one saccharine, particularly maltodextrine and starch, and melamine.

Thus, this fire-protective substance is present in liquid form and preferably has a concentration of 45 % by weight in water. This fire-protective substance is transparent, colourless and odourless. It may generally be used as an impregnating agent; it may be deposited for example on deciduous trees or conifers in order to prevent the danger of forest fire, or on christmas trees, generally on all regenerating raw materials as well as materials which may be recycled, for example paper, paperboard, cardboard articles, rubber or caoutchouc, or on building materials, for example insulating layer forming plates. This fire-protective substance may be sprayed onto the material or added to materials comprising one or more of the above-mentioned components during the production of the respective material.

The depositing of the fire-protective substance onto the respective material or the respective substance may be performed under pressure, low-pressure, high-pressure or under vacuum. The fire-protective substance according to the present invention is preferably sprayed onto the respective object as an impregnating agent. It is however also possible to submerge the respective object into the fire-protective substance. In the last-mentioned case, the holding time of the respective object in the fire-protective substance depends on the wetting and absorbency properties of the respective material.

It is further possible to also use this fire-protective substance as an additive or filler, particularly to incorporate said substance into a glue or a binding agent or into special fibers or fabrics such that the fire-protective substance may for example be included in all products comprising glue. Normally, up to 25 % by weight of a glue or a binding agent may consist of the respective fire-protective substance. Such a glue is for example applied during the production of particle boards. It is further possible to use this fire-protective substance as an impregnating or coating agent or as an additive or filler during the production of mats made of building materials or insulating materials, and during the production of paperboard, woodpulp, cellulose and the like materials especially made of materials which are recycable. The fire-protective substance according to the present invention may also be used as a coating agent with respect to all regenerating raw materials. Thus, this fire-protective substance is suitable for all wettable and/or absorptive materials.

It is further pointed out that also this fire-protective substance is water-soluble such that clothing which are for example sprayed with the fire-protective substance, may chemically be cleaned, but may not be washed in order to maintain the fire-resisting properties. It is further pointed out that all of the above-mentioned fire-protective substances are mutually mixable.

For the treatment of materials or substances with one of the above-mentioned fire-protective substances, the fire-protective substance is deposited as an impregnating or coating agent onto the material or substance to be protected or onto an object comprising said material or substance. The fire-protective substance may also directly be incorporated as an additive or filler into the material or substance as described above with respect to a fire-protective substance which is particularly suitable for wettable and/or absorptive materials. The material or the substance or the object comprising the material or the substance preferably is brushed or sprayed with the fire-protective substance. Moreover, the material or the substance or the object comprising the material or the substance may be submerged into the fire-protective substance.

The designations mentioned in this description may be registered trademarks which are not indicated therein. In this description and the claims, the letter "l" is used as the abbreviation for "litre".

In the following table, references are for instance stated where the above-mentioned products or substances may be obtained.

| **Product** | **Source of Supply (Company)** |
|---|---|
| Dipolit 454 | Rotta GmbH, Mannheim, Germany |
| Dyhard 100 S | SKW Trostberg AG, Trostberg, Germany |
| Engobe | Cerdec, Frankfurt, Germany |
| Exolith 462 | Hoechst, Frankfurt, Germany |
| Lafarge black or white | Lafarge, Duisburg, Germany |
| Maltodextrine 19 | SHS GmbH, Heilbronn, Germany |
| Melamine | SKW Trostberg AG, Trostberg, Germany |
| Melflam 136 | SKW Trostberg AG, Trostberg, Germany |
| Molochite | ECC Internat. GmbH, Düsseldorf, Germany |
| Vermiculit | Klein GmbH, Zellertal (Harxheim),Germany |

The product melflam as mentioned in this description particularly is the product melflam 136 as stated in the table, the substance maltodextrine particularly is the substance maltodextrine 19 as stated in the table. The above-mentioned clay or the different kinds of clay, namely chamotte and kaolin, are available at the above-mentioned Company ECC Internat. GmbH, Düsseldorf, Germany.

## Claims

1. Fire-protective substance particularly for the treatment of objects made of steel, **characterized by**
at least one priming component (10, 13) consisting of at least
a dehydrating agent,
a binding agent,
ceramic wool,
a fire-proof clay and
a glaze,
an intermediate component (11) consisting of at least
a dehydrating agent,
a binding agent,
ceramic wool,
a fire-proof clay,
a glaze,
an insulating material and
additional clay,
and by a swelling component (12) consisting of at least
a dehydrating agent,
a binding agent,
a blowing agent,
ceramic wool,
a fire-proof clay, blowing graphite and
an insulating layer forming agent.

2. Fire-protective substance according to claim 1, **characterized in that** the dehydrating agent is the liquid product melflam and ammonium polyphosphate, preferably the product exolith 462, the binding agent is the product lafarge, with respect to the swelling component (12) together with a saccharide, preferably maltodextrine, and the blowing agent is the product melamine, and that, preferably, the ceramic wool consists of crushed ceramic fibers, and the fire-proof clay is ground chamotte, the glaze is the product engobe, the insulating material is the powdery product vermiculit fine, the additional clay is kaolin, preferably the product molochite, and the insulating layer forming agent is the product dyhard 100 S as additional blowing agent.

3. Fire-protective substance according to claim 1 or 2, **characterized in that** the at least one priming component (10, 13) is an admixture having the composition
240 ml melflam
515 g lafarge
20 g ceramic wool
300 g chamotte
400 g engobe
300 g exolith 462,
that the intermediate component (11) is an admixture having the composition
1790 ml melflam
988 g lafarge
122 g ceramic wool
300 g chamotte
400 g engobe
300 g exolith 462
693 g vermiculit
300 g molochite and
that the swelling component (12) is an admixture having the composition
370 ml melflam
300 g lafarge
60 g ceramic wool
300 g of a mixture consisting of
300 g blowing graphite
500 g chamotte
530 g exolith 462
400 g of a mixture consisting of
441 ml melflam
358 g maltodextrine
16 g melamine
62 g exolith 462
21 g dyhard 100 S.

4. Fire-protective substance according to one of the foregoing claims, **characterized in that** the viscosity of the respective component (10 to 13) is adjustable with additional blowing agent, preferably melamine, and that, preferably, the thickness of deposition on the object (1) to be protected is about 0.8 mm for the first priming component (10), about 1 mm for the intermediate component (11), about 2.7 mm for the swelling component (12) and about 0.4 mm for the second priming component (13), and that the whole thickness of deposition with respect to the first and the second priming component (10, 13), the intermediate component (11) and the swelling component (12) is at least 4.9 mm.

5. Method for depositing of a fire-protective substance particularly on an object made of steel, said fire-protective substance according to one of the foregoing claims, **characterized by** the following steps:
(a) depositing of the first priming component onto the surface of the clean, fat free object;
(b) depositing of the intermediate component or of the swelling component onto the component according to (a);
(c) depositing of the swelling component (unless already deposited under (b)) or of the intermediate component (unless already deposited under (b)) onto the component according to (b);
(d) depositing of the second priming component onto the component according to (c).

6. Method according to claim 5, **characterized in that** the subsequent component is deposited on the dry, preceding component, that, preferably, a final covering component which is not soluble in water, is deposited on the second priming component, and that the respective components are deposited in the form of a cover or a coating on the object by means of one or more coats of paint, by one single spraying step or several spraying steps, by sprinkling or by submerging the object into the respective component.

7. Fire-protective substance particularly for plastic materials like thermoplastic, duroplastic, elastomeric materials, polyurethanes or the like, at least comprising a dehydrating agent, **characterized in that** the dehydrating agent is ammonium polyphosphate.

8. Fire-protective substance particularly for plastic materials like thermoplastic, duroplastic, elastomeric materials, polyurethanes or the like, comprising at least a blowing agent, **characterized in that** the blowing agent is melamine or melamine phosphate or melamine cyanurate.

9. Fire-protective substance particularly for plastic materials like thermoplastic, duroplastic, elastomeric materials, polyurethanes or the like, comprising at least a dehydrating agent and a blowing agent, **characterized in that** the dehydrating agent is ammonium polyphosphate and the blowing agent is melamine or melamine phosphate or melamine cyanurate.

10. Fire-protective substance according to claim 9, having a binding agent, **characterized in that** the binding agent comprises at least one saccharide, preferably maltodextrine and/or starch, preferably wheat starch, or that the binding agent is a saccharine, preferably maltodextrine, and gelatine, that, preferably, 3 to 30 parts by weight of the dehydrating agent and/or the blowing agent related to the weight of the mass of the plastic material is admixed therewith as an additive or filler, and that 6 to 60 parts by weight of the binding agent related to the weight of the mass of the plastic material is admixed therewith as an additive or filler, wherein, preferably, each saccharine or the saccharide as well as the gelatine is present with a portion of 3 to 30 parts by weight related to the weight of the mass of the plastic material.

11. Fire-protective substance particularly for the treatment of wood or materials comprising wood or materials comprising regenerating raw materials, having at least a dehydrating agent, a binding agent and a blowing agent, **characterized by** a mixture further comprising an insulating layer forming agent.

12. Fire-protective substance according to claim 11, **characterized in that** the dehydrating agent is the liquid product melflam and ammonium polyphosphate, preferably the product exolith 462, the binding agent is a saccharide, preferably maltodextrine, the blowing agent is melamine or melamine phosphate or melamine cyanurate, and the insulating layer forming agent is the product dyhard 100 S as additional blowing agent, and that, preferably, the admixture has the following composition:
441 ml melflam
358 g maltodextrine
16 g melamine
21 g dyhard 100 S
62 g exolith 462.

13. Fire-protective substance particularly for the coating of cables, having at least a dehydrating agent, a binding agent and a blowing agent, **characterized by** an admixture further comprising clay and an insulating layer forming agent.

14. Fire-protective substance according to claim 13, **characterized in that** the dehydrating agent is the liquid product melflam and ammonium polyphosphate, preferably the product exolith 462, the binding agent is at least one saccharine, preferably maltodextrine and/or starch, and the blowing agent is melamine or melamine phosphate or melamine cyanurate, that the clay comprises a fire-proof clay in the form of ground chamotte and additional clay in the form of kaolin, preferably the product molochite, that the insulating layer forming agent is the product dyhard 100 S as an additional blowing agent and that, preferably, the admixture has the following composition:
29.1 l melflam
6.9 kg maltodextrine
2.6 kg starch
0.603 kg melamine
8.9 kg chamotte
6.9 kg molochite
0.4 kg dyhard 100 S
4.9 kg exolith 462.

15. Fire-protective substance particularly for wettable and/or absorptive materials or substances as textiles, paper, paperboard, regenerating raw materials or the like, having at least a dehydrating agent and a binding agent, **characterized in that** the dehydrating agent comprises the following components which are solved in water: urea phosphate, monoammonium phosphate and diammonium phosphate or instead of the last mentioned substance ammonium hydrogen phosphate or ammonium phosphate or ammonium sulphate.

16. Fire-protective substance according to claim 15, **characterized in that** the binding agent is starch, preferably maize starch or carbonized starch, and that a concentrated, acid parent solution is present with the following composition:
20 l water
19 g maize starch
8.2 kg urea phosphate
4.2 kg monoammonium phosphate,
wherein the parent solution may be neutralized by the addition of 50 parts by weight of water with respect to the weight of the parent solution and 1 - 4.2 kg diammonium phosphate or ammonium hydrogen phosphate or ammonium phosphate or ammonium sulphate such that the resulting solution comprises a pH-value between about 6.5 and 7.2.

17. Fire-protective substance according to claim 15 or 16, **characterized in that** the solution further comprises a blowing agent, preferably the fire-protective substance particularly for the treatment of wood etc., and that, preferably, the portion of the blowing agent in the solution is 5 to 30 % by weight and the admixture further comprises emulsifying agents and/or cross-linking agents, preferably the product dipolit 454.

18. Method for producing of a fire-protective substance according to one of the claims 15 to 17, **characterized by the** following steps:
(a) dissolving of 19 g of a binding agent in 1 litre of water having a temperature between 60 and 80 °C;
(b) adding of 19 litres of water having a temperature between 60 and 80 °C into the admixture according to (a);
(c) adding of 8.2 kg urea phosphate and 4.2 kg monoammonium phosphate to the admixture according (b);
(d) adding of 50 parts by weight of water to the admixture according to (c);
(e) adding of diammonium phosphate or ammonium hydrogen phosphate or ammonium phosphate or ammonium sulphate to the admixture according to (d), said ammonium component being present with such a portion that the pH-value of the resulting solution is between about 6.5 and 7.2;
(f) optionally diluting of the solution according to (e) with water such that the portion of the solution in the final solution is between 10 and 100 % by weight.

19. Method according to claim 18, **characterized in that** emulsifying agents and/or crosslinking agents are added to the solution or to the final solution.

20. Method for treating of materials or substances with a fire-protective substance according to one of the foregoing claims, **characterized in that** the fire-protective substance is deposited as an impregnating agent or a coating agent onto the material or substance to be protected or onto the object comprising the material or the substance, or that the fire-protective substance is directly incorporated as an additive or filler into the material or the substance, and that the material or the substance or the object comprising the material or the substance is preferably brushed or sprayed with the fire-protective substance or is submerged therein.
